# Europäisches Patentamt

# European Patent Office

# Office européen des brevets

(19)

(11) Publication number: **0 106 548**
**B1**

(12)

# EUROPEAN PATENT SPECIFICATION

(45) Date of publication of patent specification: **13.01.88**

(51) Int. Cl.⁴: $G\ 02\ B\ 6/44$

(21) Application number: **83305490.1**

(22) Date of filing: **19.09.83**

(54) Coated optical fibers.

(30) Priority: **20.09.82 JP 142136/82 u**
**20.09.82 JP 163536/82**
**30.05.83 JP 95396/83**

(43) Date of publication of application:
**25.04.84 Bulletin 84/17**

(45) Publication of the grant of the patent:
**13.01.88 Bulletin 88/02**

(84) Designated Contracting States:
**DE FR GB IT SE**

(56) References cited:
**DE-A-2 533 144**
**DE-A-2 944 947**

(73) Proprietor: **THE FURUKAWA ELECTRIC CO., LTD.**
**6-1, 2-chome, Marunouchi Chiyoda-ku**
**Tokyo (JP)**

(72) Inventor: **Shirasaka, Yusei c/o Chiba Works, The Furukawa**
**Electric Co. Ltd. No. 6, Yahatakaigandon**
**Ichihara-shi Chiba-Pref (JP)**
Inventor: **Fuse, Ken-Ichi c/o Chiba Works, The Furukawa**
**Electric Co. Ltd. No. 6, Yahatakaigandon**
**Ichihara-shi Chiba-Pref (JP)**
Inventor: **Kondo, Kazuo c/o Nakadahara Plant**
**Arisawa Man. Co. Ltd. No. 1, Ohaza Nakadahara**
**Jyoetsu-shi Niigata-Pref (JP)**
Inventor: **Tanaka, Yuichi c/o Nakadahara Plant**
**Arisawa Man. Co. Ltd. No. 1, Ohaza Nakadahara**
**Jyoetsu-shi Niigata-Pref (JP)**

(74) Representative: **Crawford, Andrew Birkby et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## 0 106 548

**Description**

The present invention relates to optical fibres of the type having a reinforced coating layer thereon, which layer is composed of a cured thermosetting resin containing reinforcing fibres and particles.

Coated optical fibres have been developed for the purpose of improving the mechanical properties of the fibres and have high mechanical strength against bending and also flexibility. However the surface of the reinforced coating layer is planed or split when the reinforced coating layer is formed only of the reinforced fibrous material and the thermosetting resin, thereby exhibiting an improper external appearance.

Such problems in the external appearance have been heretofore overcome by including inorganic filler such as calcium carbonate or short glass fibres (having particle diameter of higher than 100 µm) in the reinforced coating layer, thereby stabilising at the time of forming the coating layer. However, it has been found that conventional optical fibres having this filler-containing reinforced coating layer have reduced transmission characteristics at a high temperature range of 100 to 150°C.

It is thought that the cause for the above decrease is that the radial linear expansion coefficient of the reinforced coating layer is $5 \times 10^{-5}$ relative to that of the optical fibre strand, while that of the primary coating (for example, silicone rubber) is $1 \times 10^{-4}$. Accordingly, in the above high temperature range the primary coating thermally expands more than the reinforced coating layer. When the lateral pressure due to the expansion of the primary coating is applied to the optical fibre, the fillers in the reinforced coating layer cause the lateral pressure to become irregular, with the result that a microbend occurs, thereby causing the transmission loss of the optical fibre to increase.

Conventionally, only problems in the external appearance have been considered. Accordingly, the relationship between the filler and the transmission characteristics has not been solved, and fillers which had been pulverised to particle diameter larger than 100 µm have existed at random in the vicinity of the boundary between the reinforced coating layer and the primary coating, thereby causing the primary coating to be deformed and accordingly the optical fibre to produce a microbend. A remedy against these problems has not hitherto been found.

Accordingly, it is an object of this invention to provide coated optical fibres which can eliminate the aforementioned disadvantages of conventional coated optical fibres and can improve the reinforced coating layer in optical fibres of this type to give improved external appearance and transmission characteristics in the high temperature range.

The invention is characterised in that the particles are composed of an inorganic material and have a diameter of less than 30 µm, or are composed of a thermoplastic material having a softening temperature below the forming temperature of the reinforced coating layer and have a diameter of less than 50 µm.

Embodiments of the invention will now be more particularly described with reference to the accompanying drawings, in which:

FIGURE 1 is an enlarged sectional view showing one embodiment of a coated optical fibre;

FIGURE 2 is an enlarged sectional view showing another embodiment of a coated optical fibre; and

FIGURE 3 is a graph indicating the relationship between transmission characteristics and the temperature of the coated optical fibre as shown in Figure 1.

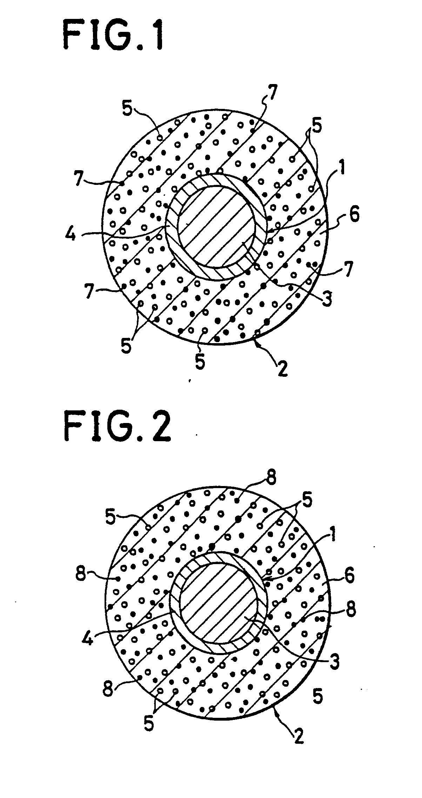

Reference is now made to the drawings, particularly to Figures 1 and 2, which show preferred embodiments of coated optical fibres. In Figures 1 and 2, reference numeral 1 designates an optical fibre strand, and reference numeral 2 designates a reinforced coating layer about the outer periphery of the strand 1.

The strand 1 is composed of an optical fibre 3 of quartz and a coating layer 4 formed on the outer periphery of the optical fibre 3. The optical fibre 3 is a GI (graded-index) type or an SI (step-index) type, and the core/clad is, for example, 50/125 µm.

The coating layer 4 is formed of thermosetting resin such as silicone resin or silicone rubber, or photocurable resin such as acrylate compound, and has an outer diameter of, e.g. 400 µm.

This coating layer 4 functions as a primary coating and may also function as a buffer coating.

The reinforced coating layer 2 is composed of a composite which has a plurality of long reinforcing fibrous materials, 5,5,5, . . . , thermosetting resin 6, and fine particles to be described later (i.e. particles 7 in Fig. 1 and particles 8 in Fig. 2), which are integrated with the resin 6 as a binder.

The fibrous materials 5,5,5, . . , may be of glass fibre, carbon fibre, Aramid (Trade Mark) fibre, molten silica fibre, ceramic fibre, or polyamide fibre, in a roving state or in a yarn state.

The thermosetting resin 6 may be unsaturated polyester or epoxy resin.

The fine particles which are mixed in the coating layer 2 may be inorganic or thermoplastic, or a mixture of both.

Figure 1 shows a coated optical fibre in which fine inorganic particles 7,7,7, . . , are mixed in the coating layer 2, and Figure 2 shows a coated optical fibre in which fine thermoplastic particles 8,8,8, . . , are mixed in the coating layer 2.

In the coated optical fibre in Figure 1, the fine inorganic particles 7,7,7, . . , may consist of calcium carbonate, talc, hydrated alumina, clay or zeolite, and have a maximum diameter less than 30 µm, mean diameter less than 3.0 µm, and a content of less than 25% by weight of the resin 6.

Fine thermoplastic particles 8,8,8, . . . . , which are mixed in the reinforced coating layer 2 in the coated

2

optical fibre in Figure 2 may be polystyrene, chlorinated polyethylene, ABS resin or cellulose plastic, and have particle diameters of 5 to 50 μm and a softening temperature lower than 120°C. In this case the content is again less than 25% by weight of the resin 6.

The characteristics of the coated optical fibres in Figures 1 and 2 will now be described.

Since the fine inorganic particles 7 are mixed as fillers into the coating layer 2, no irregularities are produced on the surface of the coating layer 2 during forming, thereby eliminating problems in the external appearance. Since the particle diameter of the fine particles 7, is less than 30 μm, irregular lateral pressure which may cause a microbend at high temperatures will not develop, thereby obtaining high transmission characteristics.

This advantage of the optical fibre can be demonstrated by the following:

Several coated optical fibres with different particle diameters of fine inorganic particles 7 in the reinforced coating layer 2 were produced, and were evaluated as below.

(Unit = μm)

| Item Embodiments | Fine inorganic particles | | Transmission characteristic | | Productivity | Total Evaluation |
|---|---|---|---|---|---|---|
| | Mean dia. | Max. dia. | Initial value | at 150° | | |
| 1 | 10.2 | 120 | × | × | ○ | × |
| 2 | 8.3 | 35 | × | × | ○ | × |
| 3 | 5.2 | 35 | △ | × | ○ | × |
| 4 | 3.0 | 25 | ○ | ○ | ○ | ○ |
| 5 | 1.0 | 10 | ◎ | ◎ | ○ | ○ |
| 6 | 0.007 | — | ◎ | ◎ | ◎ | ◎ |

(× = poor, △ = average, ○ = good, ◎ = excellent)

As evident in the above Table, in embodiments 1, 2 and 3, with a particle size out of the range of the present invention, though the productivity in view of the external appearance is good, the transmission characteristic in the high temperature range is poor. However, in embodiments 4, 5 and 6 in which the particle sizes are in the range of the present invention, not only the productivity but the transmission characteristic at high temperature are excellent.

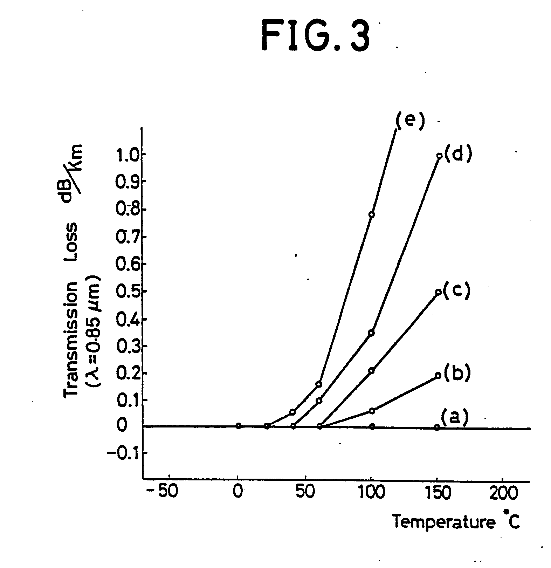

In Figure 3, curve a is in respect of fibres having a maximum diameter of the particles 7 less than 5 μm, curve b (less than 10 μm), and curve c (less than 30 μm) all of which are in the range according to the present invention. As can be seen the transmission loss at high temperature hardly increases, and particularly in curve a, the transmission characteristics are stable. However, in curve d (maximum particle diameter 50 μm) and curve e (80 μm), both out of the range of the invention, the transmission loss increases considerably in the high temperature range.

In the case of the coated optical fibres of Figure 2, the fine thermoplastic particles 8 are mixed as fillers in the reinforced coating layer 2, and the thermoplastic resin 6 increases its apparent viscosity by virtue of the fine particles 8 softening during forming the reinforced coating layer 2, thereby avoiding problems in the external appearance such as scratch or split due to a moulding die. Further, since the fine particles 8, can be plasticised, irregular lateral pressure which causes a microbend does not occur during high temperature forming thereby avoiding or lessening the transmission loss of the optical fibre 3.

An embodiment of the coated optical fibre of Figure 2 will now be described.

The fine thermoplastic particles 8, in the reinforced coating layer 2 are of polystyrene with a mean particle diameter of 30 μm, and the reinforced coating layer 2 contained 10% by weight of the fine particles 8. Poor external surface appearance did not occur and the transmission loss increase was only 0 to 0.5 dB/km.

The temperature of the drawing die used in forming the coated optical fibre was 160 to 195°C, and the plasticising temperature of the fine particles 8, was 106°C.

When a FRP (fibre-reinforced plastics) coating layer is formed on the outer periphery of the optical fibre strand, a compression distortion is produced in the optical fibre due to the contraction during forming of the coating layer, which distortion is converted to a bending distortion, thereby causing a microbend frequently to be produced in the optical fibre.

3

Since the Young's modulus of the plastics coating layer is small in the general nylon coated optical fibre, the coating layer thereafter gradually alleviates, even if a compression distortion is produced, the stress so that the distortion of the optical fibre becomes almost zero. However with a reinforced optical fibre, the Young's modulus of the reinforced coating layer is large so that the stress is alleviated hardly at all with the result that the distortion remains as it was, thereby causing large transmission loss in the optical fibre.

This distortion is called "a process distortion" of the optical fibre. When this process distortion is 0.00%, the difference between the length of the coating layer and the length of the optical fibre coincides with the optical path difference of a general plastics coated optical fibre which has good adherence between the coating layer and the optical fibre strand.

The optical path difference of the optical fibre means the difference between the length (unit length) of the optical fibre core before coating and the length of the core after coating, and is represented by percentage.

In case of the FRP coated optical fibre, since the adherence between the reinforced coating layer and the optical fibre strand is insufficient, the difference between the length of the reinforced coating layer and the length of the optical fibre might not coincide with the optical path difference of the optical fibre. Even if the optical path difference of 0.00% is measured when the optical fibre is, for example, zigzag in a no load state of the reinforced coating layer, the lengths of the reinforced coating layer and the optical fibre are actually different so that the optical fibre tends to microbend, with the result that there is no reliability in the transmission characteristics based on the optical path difference.

In order to eliminate the increase in the transmission loss caused by the process distortion (compression distortion) in the FRP coated optical fibre and to enhance the reliability in the product management, a tensile distortion is imparted to the optical fibre strand 1 coated with the reinforced coating layer 2.

As described above, in the coated optical fibres of Figures 1 and 2, the tensile distortion is applied to the optical fibre strand 1, and even if the reinforced coating layer 2 of high Young's modulus is, accordingly, contracted due to the variations in the temperature and the external force, a compression distortion hardly occurs in the optical fibre strand 1, with the result that no problems such as microbends occurs thereby securing high transmission characteristics of the optical fibre 3.

The above-described tensile distortion has an optimum range of 0.01 to 0.10%, because, if the distortion is less than 0.01%, the effect of preventing microbends may be insufficient, while if the distortion is more than 0.10%, the fatigue degree of the optical fibre 3 becomes large, thereby possibly causing a breakdown.

When the optical fibre strand 1 undergoes tensile distortion, there is no possibility that the strand 1 is zigzag in the reinforced coating layer 2, with the result that, when the optical path difference in the reinforced optical fibre exhibits 0.00%, the value can be reliable.

A method of fabricating the coated optical fibre will now be described. The optical fibre strand 1 and the reinforced fibrous materials 5, in a roving state are supplied in one direction so that the fibrous materials 5, are attached longitudinally to the outer periphery of the optical fibre strand 1. Before that, the fibrous materials 5, are passed once through a liquid resin tank in which the fine particles 7, or 8, have been agitated and mixed, thereby impregnating the fibrous materials 5 with uncured resin 6. Alternatively uncured (liquid) thermosetting resin 6 is supplied to the fibrous materials 5, through downstream supply means in the course of longitudinally attaching the materials 5, to the strand 1. Then, the strand 1 and the materials 5, thus impregnated are drawn through a mesh plate or a forming die as required, further drawn through a cylindrical heating and curing furnace to cure the uncured resin 6. The coated optical fibre thus fabricated is further drawn through a drawing machine, and is then wound by a winch.

When the coated optical fibre is made in the above described process, the relationship between the supply speed $V_1$ of the optical fibre strand 1 before the heating and curing furnace and the drawing speed $V_2$ after the furnace is set so that $V_1 < V_2$. In this manner, a predetermined tensile distortion is imparted to the optical fibre strand 1 in the reinforced coating layer 2.

The coated optical fibre comprises an optical fibre strand and a reinforced coating layer formed thereon and which has a plurality of reinforced fibrous materials and thermosetting resin cured therein. The reinforced layer has mixed therein fine inorganic particles having particle diameter less than 30 μm and/or fine thermoplastic particles plasticised at a temperature lower than the forming temperature of the reinforced coating layer and having particle diameter less than 50 μm. The external appearance of the reinforced coating layer can be improved, and also the increase in the transmission loss in the high temperature range of the FRP coated optical fibre can be suppressed.

## Claims

1. A coated optical fibre comprising an optical fibre (1) and a reinforced coating layer (2) thereon, the reinforced coating layer (2) consisting of a cured thermosetting resin (6) containing reinforcing fibres (5) and particles (7, 8) characterised in that the particles (7, 8) are composed of an inorganic material and have a diameter of less than 30 μm, or are composed of a thermoplastic material having a softening temperature below the forming temperature of the reinforced coating layer (2) and have a diameter of less than 50 μm.

4

2. A coated optical fibre according to claim 1, in which the content of particles (7, 8) with respect to thermosetting resin (6) is less than 25% by weight.

3. A coated optical fibre according to claim 1 or 2, in which the mean particle diameter of the inorganic particles (7) is less than 3.0 μm.

4. A coated optical fibre according to any of claims 1 to 3, in which the inorganic particles (7) are formed of calcium carbonate, talc, hydrated alumina, clay, zeolite, or a mixture of two or more thereof.

5. A coated optical fibre according to claim 1 or 2, in which the thermoplastic particles (8) have a softening temperature of less than 120°C.

6. A coated optical fibre according to any of claims 1, 2, or 5, in which the thermoplastic particles (8) are formed of polystyrene, chlorinated polyethylene, ABS resin, cellulose plastic, or a mixture of two or more thereof.

7. A coated optical fibre according to any of claims 1 to 6, in which a tensile distortion is imparted to the optical fibre (1) to be coated with the reinforced coating layer (2) during manufacture.

8. A coated optical fibre according to claim 7, in which the tensile distortion imparted to the optical fibre (1) during manufacture is from 0.01 to 0.10%.

## Patentansprüche

1. Beschichtete optische Faser, bestehend aus einer optischen Faser (1) und einer verstärkten Beschichtungslage (2) darauf, wobei die verstärkte Beschichtungslage (2) aus einem gehärteten thermofixierenden Harz, das Verstärkungsfasern (5) und Partikel (7, 8) enthält, besteht, dadurch gekennzeichnet, daß die Partikel (7, 8) aus einem anorganischen Material bestehen und einen Durchmesser von weniger als 30 μm haben oder aus einem thermoplastischen Material bestehen, das eine Erweichungstemperatur unter der Ausbildungstemperatur der verstärkten Beschichtungslage (2) hat, und die einen Durchmesser von weniger als 50 μm haben.

2. Beschichtete optische Faser nach Anspruch 1, bei welcher der Gehalt an Partikeln (7, 8) in bezug auf das thermofixierende Harz (6) kleiner als 25 Gew.-% ist.

3. Beschichtete optische Faser nach Anspruch 1 oder 2, bei der der mittlere Partikeldurchmesser der anorganischen Partikel (7) kleiner als 3,0 μm ist.

4. Beschichtete optische Faser nach einem der Ansprüche 1 bis 3, bei der die anorganischen Partikel (7) aus Calciumcarbonat, Talk, hydrierter Tonerde, Ton, Zeolith oder einer Mischung aus zwei oder mehr der vorgenannten Materialien bestehen.

5. Beschichtete optische Faser nach Anspruch 1 oder 2, bei der die thermoplastischen Partikel (8) eine Erweichungstemperatur von weniger als 120°C haben.

6. Beschichtete optische Faser nach einem der Ansprüche 1, 2 oder 5, bei der die thermoplastischen Partikel (8) aus Polystyrol, chloriertem Polyäthylen, ABS-Kunstharz, Zelluloseplastik oder einem Gemisch aus zwei oder mehr der genannten Materialien bestehen.

7. Beschichtete optische Faser nach einem der Ansprüche 1 bis 6, bei der die mit der verstärkten Beschichtungslage (2) zu beschichtende optische Faser (1) während der Herstellung einer Streckverformung unterworfen wird.

8. Beschichtete optische Faser nach Anspruch 7, bei der die Streckverformung, der die optische Faser (1) während der Herstellung unterworfen wird, im Bereich zwischen 0,01 und 0,10% liegt.

## Revendications

1. Une fibre optique revêtue comprenant une fibre optique (1) et une couche de revêtement renforcée (2) sur cette fibre, la couche de revêtement renforcée (2) étant constituée d'une résine thermodurcissable durcie (6), contenant des fibres de renforcement (5) et des particules (7, 8), caractérisée en ce que les particules (7, 8) sont composées d'une matière minérale et ont un diamètre inférieur à 30 μm, ou sont composées d'une matière thermoplastique ayant une température de ramollissement inférieure à la température de formation de la couche de revêtement renforcée (2) et ont un diamètre inférieur à 50 μm.

2. Une fibre optique revêtue selon la revendication 1, caractérisée en ce que le teneur en particules (7, 8) par rapport à la résine thermodurcissable (6) est inférieur à 25% en poids.

3. Une fibre optique revêtue selon la revendication 1 ou 2, caractérisée en ce que le diamètre moyen de particule des particules minérales (7) est inférieur à 3,0 μm.

4. Une fibre optique revêtue selon l'une quelconque des revendications 1 à 3, caractérisée en ce que les particules minérales (7) sont formées de carbonate de calcium, de talc, d'alumine hydratée, d'argile, de zéolite ou d'un mélange de deux ou plus de deux de ces produits.

5. Une fibre optique revêtue selon la revendication 1 ou 2, caractérisée en ce que les particules thermoplastiques (8) ont une température de ramollissement inférieure à 120°C.

6. Une fibre optique revêtue selon l'une quelconque des revendications 1, 2, 5, caractérisée en ce que les particules thermoplastiques (8) sont formées de polystyrène, de polyéthylène chloré, de résine ABS, de matière plastique cellulosique, ou d'un mélange de deux ou plus de deux de ces matières.

7. Une fibre optique revêtue selon l'une quelconque des revendications 1 à 6, caractérisée en ce qu'une distorsion de tension est communiquée à la fibre optique (1) à revêtir avec la couche de revêtement renforcée (2) durant la fabrication.

8. Une fibre optique revêtue selon la revendication 7, caractérisée en ce que la distorsion de tension communiquée à la fibre optique (1) durant la fabrication est de 0,01 à 0,10%.

# FIG.1

# FIG.2

# FIG.3